# EUROPÄISCHE PATENTANMELDUNG

(11) **EP 0 875 134 A1**
(43) Veröffentlichungstag der Anmeldung: **04.11.1998**
(21) Anmeldenummer: 98106503.0
(22) Anmeldetag: 08.04.1998
(51) Int. Cl.: A01D 34/18

(54) **Mähbalken**

(30) Priorität: 30.04.1997 US 841706
(71) Anmelder: Deere & Company, Moline, Illinois 61265-8098 (US)
(72) Erfinder: McCredie, Paul John, Milan, Illinois 61264 (US)
(74) Vertreter: Magin, Ludwig Bernhard

(57) **Zusammenfassung**

Ein Mähbalken (10) ist mit Mähfingern (14) versehen, die Schlitze (48) zur Aufnahme von oszillierenden Klingen (24) aufweisen. Oberhalb der Klingen (24) und sich in die Schlitze (48) hinein erstreckend sind Messerandrückplatten (16) vorgesehen, die die Klingen (24) relativ spielfrei an Schneidkanten der Mähfinger (14) heranbringen und einen verstopfungsfreien Schnitt bewirken.

## Beschreibung

Die Erfindung betrifft einen Mähbalken mit wenigstens einem einen Finger aufweisenden Mähfinger und wenigstens einer Messerandrückplatte, die in jeweiligen rückwärtigen Endbereichen festgelegt sind und zwischen sich einen Messerträger mit wenigstens einer Klinge gleitend aufnehmen, wobei der Mähfinger einen Schlitz zur Aufnahme der Klinge enthalt und sich die Messerandrückplatte in den Schlitz erstreckt.

Die US-A-13.433 offenbart einen Mähbalken mit einem oszillierenden Messer und einer Vielzahl von Messerfingern und Niederhalteplatten besteht. Das Messer setzt sich aus einem Messerträger und Klingen zusammen und ist in Schlitzen in den Messerfingern linear beweglich geführt. Die Niederhalteplatten liegen auf der Oberseite der Klingen auf und erstrecken sich in die Schlitze, in die sich zugleich Schrauben erstrecken, um die Vertikalbewegung der Niederhalteplatten zu begrenzen. Die Niederhalteplatten sind vertikal schwenkbar angelenkt und bilden mit den Klingen die Schnittkanten.

Das der Erfindung zugrunde liegende Problem wird darin gesehen, daß dieser bekannte Aufbau sehr aufwendig ist und beim Auftreten hoher Schnittkräfte zu erheblichem Verschleiß an den Gelenken führt.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise werden die Schnittkräfte von den Mähfingern aufgenommen, die aufgrund ihrer Herstellung als Schmiedeteil dazu ausgezeichnet in der Lage sind. Die Messerandrückplatten kommen ihrer eigentlichen Aufgabe nach und führen die Klingen in dem Schlitz des Mähfingers. Die enge Anlage der Klinge und der Messerandrückplatte in dem Schlitz stellt sicher, daß es nicht zu einem Verstopfen von Schnittgut in dem Schlitz kommt. Wenn auch gewöhnlich eine Vielzahl von Klingen, Mähfingern und Messerandrückplatten Verwendung findet, so erbringt die erfinderische Lehre dennoch auch bereits beim Vorhandensein nur einer dieser Teile den entsprechenden Erfolg. Im weiteren wird davon ausgegangen, daß diese Teile mehrfach an dem Mähbalken vorhanden sind.

Die Verwendung einer Einstellschraube zum Verstellen der unter Materialspannung stehenden Messerandrückplatte, insbesondere um deren Abstand zu der Klinge oder deren Anpreßkraft auf diese einzustellen, ermöglicht es, auch nach dem Auftreten von Verschleiß einen sauberen Schnitt zu erzielen.

Eine Teile- und Kostenreduzierung tritt ein, wenn die Mähfinger und die Messerandrückplatten gemeinsam, d. h. mit denselben Mitteln, meistens Schrauben, an der Tragschiene befestigt sind.

Die Herstellung der Messerandrückplatten aus Blech, und zwar insbesondere aus Stahlblech, führt zu geringen Fertigungskosten und einem nachgiebigen Verhalten, wenn sich die Klinge aufgrund der angreifenden Kräfte nach oben bewegt.

Des weiteren wird ein verstopfungsfreies Schneiden an der nicht angetriebenen Endseite des Mähbalkens dadurch erreicht, daß der letzte Mähfinger außer einem Finger einen Grundkörper enthält, die einteilig ausgebildet sind und einen Schlitz zur Aufnahme wenigstens einer Klinge enthalten.

Um ein Eindringen von Erntegut in den ansonsten nach oben offenen Bereich des Mähfingers zu vermeiden, ist ein Deckel vorgesehen, der in gleicher Weise wie die Messerandrückplatten befestigt ist.

Eine hohe Festigkeit des Messerträgers wird erreicht, indem die Öffnungen zur Aufnahme von Schrauben, die die Klingen halten, wie auch die dazu passenden Hälse der Schrauben nicht kantig, sondern abgerundet geformt sind, wobei jedoch zum Erreichen einer Verdrehsicherung ein unrunder Querschnitt erforderlich ist. Ein ovaler oder elliptischer Querschnitt am Hals der Schraube und für die Befestigungsöffnung erscheinen besonders vorteilhaft.

In der Zeichnung ist ein nachfolgend näher beschriebenes Ausführungsbeispiel der Erfindung dargestellt. Es zeigt:
- Fig. 1: eine perspektivische Explosionszeichnung eines erfindungsgemäßen Mähbalkens,

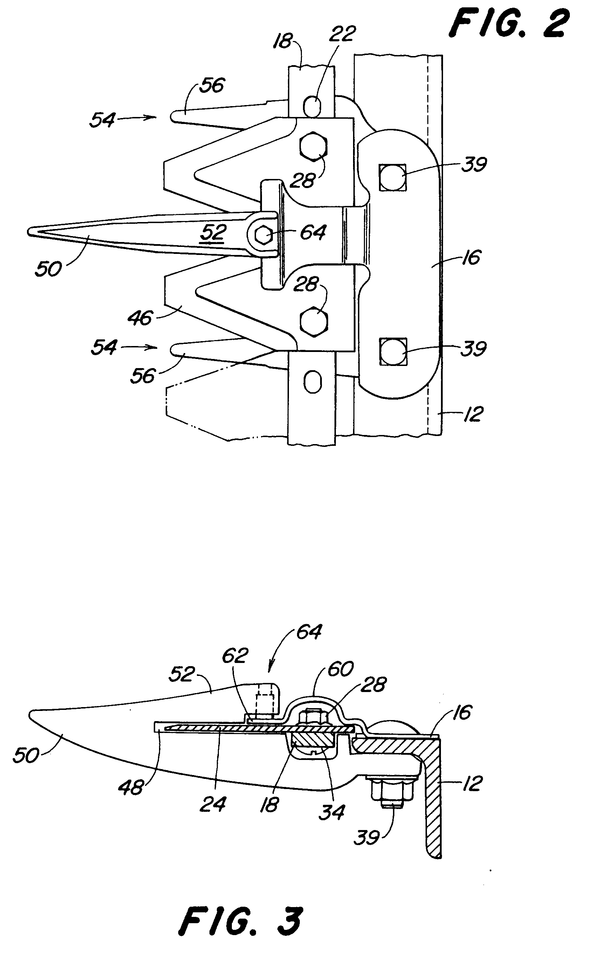

- Fig. 2: eine Draufsicht auf einen Bereich des Mähbalkens nach Figur 1,
- Fig. 3: einen Vertikalschnitt durch den Mähbalken im Bereich eines Mähfingers,
- Fig. 4: eine Draufsicht auf einen Endbereich des Mähbalkens nach Figur 1 und
- Fig. 5: einen Vertikalschnitt durch den Mähbalken in dessen Endbereich.

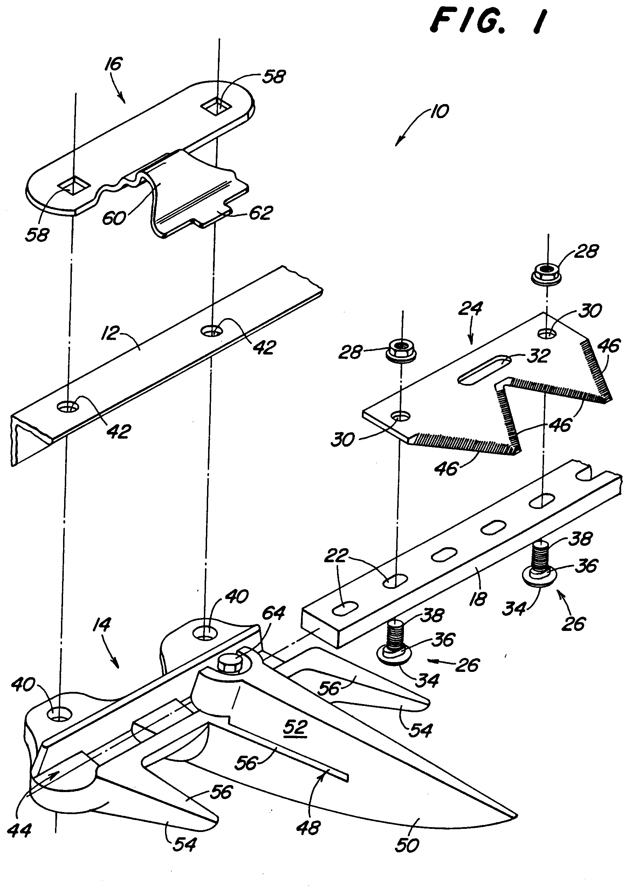

Die Explosionszeichnung in Figur 1 stellt einen Bereich eines erfindungsgemäßen Mähbalkens 10 dar. Der Mähbalken 10 enthält eine Tragschiene 12, an der Mähfinger 14 und Messerandrückplatten 16 befestigt sind. Ein Messerträger 18 ist in einer in den Mähfinger 14 eingearbeiteten Nut 20 gleitend aufgenommen. Der Messerträger 18 ist mit einer Vielzahl von ovalen Öffnungen 22 versehen. Die Tragschiene 12 und der Messerträger 18 erstrecken sich quer zu der Fortbewegungs-richtung einer den Mähbalken 10 tragenden Maschine. Die oval ausgebildeten Öffnungen 22 erstrecken sich ebenfalls in der Querrichtung. Eine Reihe von als Doppelklingen ausgebildeten Klingen 24, von denen nur eine gezeigt ist, ist auf den Messerträger 18 mittels Schrauben 26 und sechskantiger Muttern 28 befestigt.

Die Klinge 24 ist mit zwei Löchern 30 und einem Montageschlitz 32 versehen. Über den größten Teil der Länge des Messerträgers 18 sind die Klingen 24 lediglich mittels zweier Schrauben 26 auf dem Messerträger 18 gehalten, die durch die ovalen Öffnungen 22 in dem Messerträger 18 gesteckt werden und sich nach oben durch die Löcher 30 in der Klinge 24 erstrecken. Allerdings erstrecken sich an Trennstellen innerhalb des Messerträgers 18, wie dies in der US-A-5,040,363 gezeigt ist, vier Schrauben 26 durch vier zugelegene Öffnungen 22 in dem Messerträger 18 und nach oben durch die beiden Löcher 30 und den Montageschlitz 32 der Klinge 24. Die ovalen Öffnungen 22 werden dadurch erzeugt, daß ovale Löcher in den Messerträger 18 gestanzt werden.

Die Schrauben 26 sind mit runden Schraubenköpfen 34, einem ovalen Hals 36 und einem mit Gewinde versehenen Schaft 38 versehen. Der ovale Hals 36 der Schrauben 26 entspricht in seiner Form der der ovalen Öffnungen 22. Zum Zusammenbau der Klingen 24 mit dem Messerträger 18 setzt der Monteur die Schrauben 26 nach oben durch den Messerträger 18 und die Klingen 24 ein, so daß der runde Schraubenkopf 34 an dem Rücken des Messerträgers 18 zur Anlage kommt und sich der mit Gewinde versehene Schaft 38 nach oben bis über die Klinge 24 hinaus erstreckt. Die zusammenpassenden ovalen Öffnungen 22 und die ovalen Hälse 36 bewirken eine Festlegung der Schraube 26 gegen Drehung, so daß der Monteur lediglich die Muttern 28 anziehen muß, sobald diese auf den Schaft 38 der Befestigungsschraube 26 aufgedreht ist.

Der Mähfinger 14 wird mittels zweier in Figur 1 nicht gezeigter Schrauben 39 an der Tragschiene 12 befestigt, die sich durch Löcher 40 in dem Mähfinger 14 und Löcher 42 in der Tragschiene 12 erstrecken. Der Mähfinger 14 ist mit einer Kehle 44 versehen, in der der Messerträger 18 gleitend aufgenommen ist. Gezahnte Kanten 46 der Klingen 24 erstrecken sich von dem Messerträger 18 aus nach vorne und bewegen sich im Betrieb durch Schlitze 48 in einem dem Schutz der Klingen 24 dienenden Finger 50. Der Finger 50 ist mit einer oberen festen Lippe 52 versehen, die eine Art Dach für den Schlitz 48 bildet. Der Finger 50 wird von zwei Klingenstützen 54 flankiert. Der Finger 50 und die beiden Klingenstützen 54 sind mit Auflageflächen 56 versehen, die mit den gezahnten Kanten 46 der Klingen 24 zusammenwirken, um stehendes Erntegut durchzuschneiden. Es wird darauf hingewiesen, daß die beiden Mähfinger 14, die den gezeigten Mähfinger 14 flankieren, zwei Finger 50 an den gegenüberliegenden Enden und zwischen diesen eine Klingenstütze 54 enthalten würden.

Um eine gute Schneidwirkung aufrechtzuerhalten, ist es wichtig, daß die Anlage der Klinge 24 an den Auflageflächen 56 erhalten bleibt. Die Messerandrückplatte 16 ist aus Blech gebildet und mittels derselben Schrauben 39 an die Tragschiene 12 angebracht, die auch zum Befestigen der Mähfinger 14 an der Tragschiene 12 verwendet werden. Die Schrauben 39 erstrecken sich durch Löcher 58 in dem rückwärtigen Bereich der Messerandrückplatten 16. Die Messerandrückplatten 16 erstrecken sich von ihrem Befestigungsbereich aus nach vorne zu dem Finger 50 und enthalten einen gekrümmten Bereich 60, der sich über den Messerträger 18 erstreckt. Der vordere Bereich der Messerandrückplatte 16 ist mit einer Zunge 62 versehen, die sich in den Schlitz 48 zwischen der oberen Lippe 52 und der Klinge 24 erstreckt. Eine Einstellschraube 64 ist in die obere Lippe 52 eingedreht und erstreckt sich durch diese, um eine Vorrichtung zum Einstellen der vertikalen Position der Messerandrückplatte 16 zu bilden. Durch ein Verdrehen der Einstellschraube 64 kann eine Bedienungsperson die Messerandrückplatte 16 nach unten drücken und die richtige Anlage an der Oberseite der Klinge 24 erzeugen. Die Messerandrückplatte 16 ist nach dem Finger 50 ausgerichtet, so daß sich ein guter Gutfluß über den Mähbalken 10 ergibt.

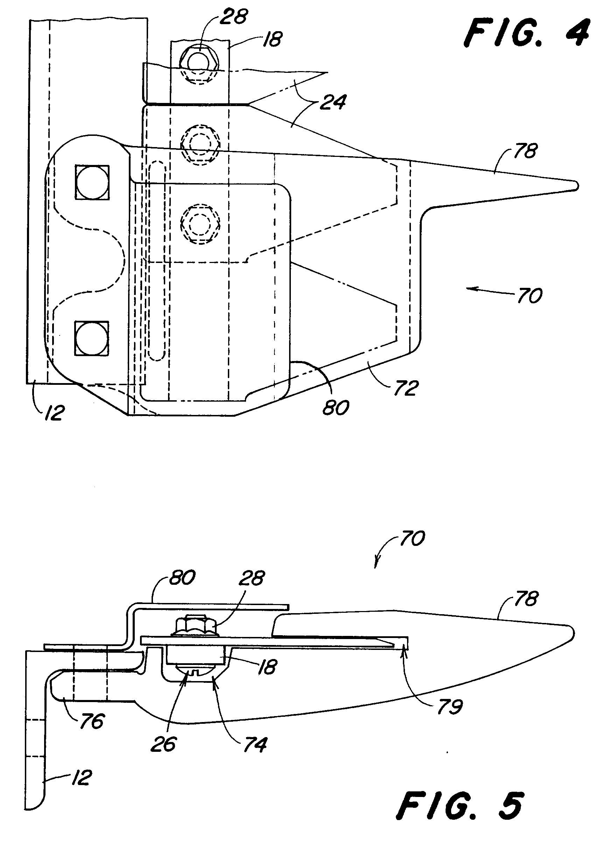

Die Figuren 4 und 5 sind auf einen speziellen Abschlußfingerabschnitt 70 gerichtet, der auf der nicht angetriebenen Seite des Mähbalkens 10 verwendet wird. Der Abschlußfingerabschnitt 70 ist ein einheitlicher Schmiedeteil, der einen Grundkörper 72 mit einer Kehle 74 zur Aufnahme des Messerträgers 18, einen Befestigungsbereich 76, der sich von dem Grundkörper 72 aus nach hinten erstreckt, um den Abschlußfingerabschnitt 70 an der Tragschiene 12 anzubringen, und einen einzigen Finger 78 enthält, der sich von dem Grundkörper 72 aus nach vorne erstreckt. Der Grundkörper 72 und der einzige Finger 78 definieren einen Schlitz 79 zur Aufnahme einer endseitigen Klinge 24. Der Grundkörper 72 bildet einen abgeschlossenen Bereich, in dem die Klinge 24 hin und her bewegt werden kann. Ein sich nach vorne erstreckender Deckel 80 ist mittels derselben genannten Schrauben 39 an die Tragschiene 12 und den Abschlußfingerabschnitt 70 angebracht.

## Patentansprüche

1. Mähbalken (10) mit wenigstens einem einen Finger (50) aufweisenden Mähfinger (14) und wenigstens einer Messerandrückplatte (16), die in jeweiligen rückwärtigen Endbereichen festgelegt sind und zwischen sich einen Messerträger (18) mit wenigstens einer Klinge (24) gleitend aufnehmen, wobei der Mähfinger (14) einen Schlitz (48) zur Aufnahme der Klinge (24) enthält und sich die Messerandrückplatte (16) in den Schlitz (48) erstreckt, dadurch gekennzeichnet, daß der Finger (50) Auflageflächen (56) mit Schneidkanten aufweist, die mit den Klingen (24) eine Schere bilden.

2. Mähbalken nach Anspruch 1, dadurch gekennzeichnet, daß in einer Lippe (52) des Fingers (50) eine Einstellschraube (64) vorgesehen ist, die auf die Messerandrückplatte (16) wirkt.

3. Mähbalken nach Anspruch 1 oder 2, dadurch gekennzeichnet, daß die Messerandrückplatte (16) und der Mähfinger (14) gemeinsam an einer Tragschiene (12) befestigt sind.

4. Mähbalken nach einem oder mehreren der vorherigen Ansprüche, dadurch gekennzeichnet, daß die Messerandrückplatte (16) aus Blech geformt ist.

5. Mähbalken nach einem oder mehreren der vorherigen Ansprüche, dadurch gekennzeichnet, daß ein Mähfinger (14) an der nicht angetriebenen Endseite des Mähbalkens außer einem Finger (78) einen Grundkörper (72) enthält, die einteilig ausgebildet sind und einen Schlitz (79) zur Aufnahme wenigstens einer Klinge (24) enthalten.

6. Mähbalken nach Anspruch 5, dadurch gekennzeichnet, daß der Grundkörper (72) im Bereich der Klinge (24) und des Messerträgers (18) von einem Deckel (80) abgeschirmt wird.

7. Mähbalken nach einem oder mehreren der vorherigen Ansprüche, dadurch gekennzeichnet, daß zur Aufnahme der Klingen (24) auf dem Messerträger (18) Schrauben (26) mit einem unrunden, jedoch nicht kantigen, vorzugsweise ovalen Hals (36) vorgesehen sind, der in eine entsprechend geformte Öffnung (22) in dem Messerträger (18) formschlüssig eingreift.
